# EUROPÄISCHE PATENTSCHRIFT

(11) **EP 2 931 006 B1**
(45) Veröffentlichungstag und Bekanntmachung des Hinweises auf die Patenterteilung: **31.05.2017**
(21) Anmeldenummer: 14164057.3
(22) Anmeldetag: 09.04.2014
(51) Int. Cl.: H05B 6/12, F24C 15/10

(54) **Kochfeld**
Hotplate
Plan de cuisson

(43) Veröffentlichungstag der Anmeldung: 14.10.2015
(73) Patentinhaber: E.G.O. Elektro-Gerätebau GmbH, 75038 Oberderdingen (DE)
(72) Erfinder: Keller, Hartmut, 76356 Weingarten (DE); Wein, Siegbert, 76703 Kraichtal (DE)
(74) Vertreter: Patentanwälte Ruff, Wilhelm, Beier, Dauster & Partner mbB

(56) Entgegenhaltungen:
- EP-A2- 2 552 175
- WO-A1-2011/128803
- DE-U1-202009 000 991
- JP-A- 2009 011 401

## Beschreibung

### Anwendungsgebiet und Stand der Technik

Die Erfindung betrifft ein Kochfeld mit einer Anzahl von Induktoren, einer Anzahl von elektrischen Baugruppen, wobei jedem Induktor jeweils eine elektrische Baugruppe zugeordnet ist, und mit einem Trägersystem zum Halten der Baugruppen.

Ein gattungsgemäßes Kochfeld ist beispielsweise in der DE 202009000991 U1 gezeigt. Ein dort verwendetes Trägersystem weist Quer- und Längsträger auf, wobei die Querträger an definierten, also diskreten Stellen jeweiliger Längsträger befestigt werden können. Baugruppen können an den Querträgern ebenfalls an definierten Stellen befestigt werden.

Um Leitungsverluste möglichst gering zu halten, ist es bei Kochfeldern wünschenswert, jeweilige Baugruppen jeweils unterhalb des Induktors, welchem er zugeordnet ist, anzuordnen. Aufgrund der beim Stand der Technik vorgegebenen diskreten Positionen ist dies bei gattungsgemäßen Kochfeldern nur mit erheblichen Einschränkungen möglich.

### Aufgabe und Lösung

Der Erfindung liegt Aufgabe, bei einem Kochfeld eine genauere Positionierung von Baugruppen unter dem jeweiligen Induktor zu ermöglichen bei geringem Aufwand.

Diese Aufgabe wird gelöst durch ein Kochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Das Kochfeld weist eine Anzahl von Induktoren, eine Anzahl von elektrischen Baugruppen, wobei jedem Induktor jeweils eine elektrische Baugruppe zugeordnet ist, und ein Trägersystem zum Halten der Baugruppen auf.

Erfindungsgemäß ist vorgesehen, dass das Trägersystem zumindest eine erste Längsschiene und eine zweite Längsschiene aufweist, welche zueinander parallel angeordnet sind und entlang welchen zumindest eine Baugruppe stufenlos verschiebbar und befestigbar ist. Dies ermöglicht eine genauere Positionierung der Baugruppe unterhalb des jeweiligen Induktors, da die Baugruppe nicht mehr nur noch in diskreten Positionen befestigt werden kann, sondern vielmehr stufenlos an die Position des Induktors angepasst werden kann. Dies erlaubt eine besonders gute Verkürzung von elektrischen Anschlüssen zwischen dem Induktor und der Baugruppe, was Leitungsverluste weitgehend minimiert.

Die Induktoren bzw. Induktionsspulen dienen bekanntermaßen dazu, ein auf dem Kochfeld stehendes Kochgeschirr zu beheizen. Hierzu werden sie typischerweise mittels eines elektrischen Wechselstroms angeregt und strahlen dann ein elektromagnetisches Feld ab. Zum Anlegen eines solchen Wechselstroms dient typischerweise die jeweils zugeordnete Baugruppe, welche hierfür geeignete Komponenten enthält, insbesondere Leistungselektronik. Das Trägersystem dient dabei dazu, die Baugruppen in einer bestimmten Position in dem Kochfeld zu halten.

Bevorzugt weist das Kochfeld eine Anzahl weiterer Längsschienen auf, welche parallel zu der ersten Längsschiene angeordnet sind, und entlang welchen eine Anzahl der Baugruppen stufenlos verschiebbar sind. Dies ermöglicht es, das Trägersystem für mehrere nebeneinander liegende Baugruppen auch quer zu den Längsschienen zu erweitern.

Es ist möglich, dass jeweils zwischen zwei parallelen Längsschienen grundsätzlich eine beliebige Anzahl an Baugruppen gehalten werden kann, die nur durch den zur Verfügung stehenden Platz begrenzt wird. Durch die weiteren Längsschienen wird dieses Konzept sozusagen zweidimensional bzw. in einer zweiten Richtung erweitert.

Bevorzugt weist das Trägersystem zumindest eine erste Querschiene und eine zweite Querschiene auf, welche zueinander parallel angeordnet sind und entlang welchen zumindest eine Baugruppe stufenlos verschiebbar bzw. platzierbar ist, um dann befestigt zu werden. Dies ermöglicht es, die Baugruppen zumindest teilweise an den Querschienen anzubringen, und damit eine zusätzliche Flexibilität in deren Positionierung in einer Richtung quer zu den Längsschienen zu erhalten. Weiter bevorzugt weist das Kochfeld eine Anzahl weiterer Querschienen auf, welche parallel zu der ersten Querschiene angeordnet sind und entlang welchen eine Anzahl der Baugruppen stufenlos verschiebbar ist. Damit kann das eben erwähnte Konzept der Querschienen in der Richtung der Längserstreckung der Längsschienen erweitert werden.

Durch die Kombinationen von weiteren Längsschienen und weiteren Querschienen kann insgesamt eine nahezu beliebige zweidimensionale Skalierung oder Erweiterung des erfindungsgemäßen Konzepts erreicht werden. So können in zwei oder drei Reihen hintereinander mehrere Induktoren samt den zugehörigen Baugruppen nebeneinander platziert werden.

Bevorzugt sind die Querschienen quer zu den Längsschienen angeordnet. Dies kann beispielsweise bedeuten, dass sie in einem Winkel von 90° zueinander stehen. Es können jedoch auch andere Winkel verwendet werden, beispielsweise welche von annähernd 90°, oder auch nur zwischen 45° und knapp 90°.

Bevorzugt ist eine Anzahl von Baugruppen unmittelbar an jeweils zwei Querschienen stufenlos befestigt, wobei ferner die jeweiligen Querschienen an zwei Längsschienen stufenlos verschiebbar befestigt sind. Damit können die jeweiligen Baugruppen entlang der Querschienen und entlang der Längsschienen jeweils stufenlos positioniert werden, was eine besonders freie und vorteilhafte Positionierung ermöglicht. Dies kann für eine Baugruppe, einige Baugruppen oder auch alle Baugruppen zutreffen.

Bevorzugt sind die Querschienen mittels einer jeweiligen Schraubverbindung mit den Längsschienen lösbar verbunden. Dabei kann es sich beispielsweise um einen Kraftschluss, einen Formschluss oder beides handeln. Dies entspricht einer einfachen Ausführung, welche auch zu Wartungszwecken leicht lösbar ist und überdies eine vorteilhafte stufenlose Positionierung ermöglicht.

Bevorzugt ist die Anzahl von Baugruppen mit einer jeweiligen Quer- oder Längsschiene mittels einer Anzahl von Schraubverbindungen lösbar verbunden. Auch dabei kann es sich beispielsweise um einen Kraftschluss, einen Formschluss oder beides handeln. Auch in diesem Fall sind Schraubverbindungen bevorzugt, weil sich diese einfach anbringen und lösen lassen und eine stufenlose Positionierung ermöglichen. Dazu können beispielsweise Schrauben an den jeweils oben aufliegenden Schienen vorgesehen sein und Schiebemuttern bzw. sogenannte Nutsteine in Nuten oder Schlitzen in der unten liegenden Schiene.

Alternativ oder zusätzlich hierzu sind gemäß jeweiliger Ausführungen eine Anzahl von Baugruppen mit einer jeweiligen Quer- oder Längsschiene mittels einer Anzahl von Clipverbindern, Abstandshaltern, Positionierstiften und/oder Federn lösbar verbunden. Damit kann auf andere Befestigungsmöglichkeiten zurückgegriffen werden. Dies kann insbesondere dann vorteilhaft sein, wenn fertige Baugruppen verwendet werden, welche bereits mit entsprechenden Befestigungsmitteln versehen sind.

Es ist möglich, dass in einem Kochfeld die erwähnten Befestigungsmittel, also Schraubverbindungen, Clipverbinder, Abstandshalter, Positionierstifte und Federn auch miteinander kombiniert werden können, wobei beispielsweise einige Baugruppen mittels einer ersten Art von Befestigungsmitteln verbunden sind und andere Baugruppen mittels anderen Befestigungsmitteln verbunden sind. Sogar bei einer Baugruppe können unterschiedliche Befestigungsmittel verwendet werden.

Weiter bevorzugt ist eine Anzahl von Quer- und/oder Längsschienen jeweils als Profilschienen ausgebildet. Eine solche Profilschiene kann vorteilhaft eine jeweilige Nut aufweisen. Damit werden eine einfache Haltung der jeweiligen Baugruppe und auch eine einfache Befestigung, beispielsweise mittels einer in die Nut eingeführten Schraube wie einer selbstschneidenden Blechschraube, erreicht. Die Nut kann auch eine Baugruppe beim Verschieben und damit beim Positionieren stabilisieren.

Gemäß einer Ausführung bilden eine oder mehrere der Quer- und/oder Längsschienen eine jeweilige Wand eines Gehäuses eines Induktionskochfelds, insbesondere eine Seitenwand. Somit kann das Kochfeld seitlich nach außen hin abgegrenzt werden, wobei die ohnehin vorhandenen Schienen bereits eine äußere Begrenzung bilden. Auf zusätzliche Bauteile kann somit verzichtet werden. Der Boden des Kochfelds kann dabei vorteilhafterweise mit einer Platte verschlossen werden.

Alternativ hierzu kann das Kochfeld in eine Gehäusewanne eingelegt und/oder darin befestigt sein. Dies ist insbesondere dann vorteilhaft, wenn das Kochfeld in einen bereits anderweitig abgegrenzten Bauraum, beispielsweise eines Herds, eingesetzt werden soll.

Bevorzugt sind eine Anzahl von Bedienelementen und/oder Anzeigen an dem Trägersystem angebracht. Dabei kann es sich beispielsweise um Anzeigen, Schalter, Regler oder Berührungsschalter handeln. Durch die Anbringung dieser Elemente und/oder Anzeigen an dem Trägersystem kann auf zusätzliche Befestigungselemente verzichtet werden.

Bevorzugt ist eine jeweilige Baugruppe unmittelbar unterhalb des Induktors, welchem sie zugeordnet ist, angeordnet. Weiter bevorzugt ist ein jeweiliger Induktor mittels einer Anzahl von Spulenkabeln elektrisch mit seiner zugeordneten Baugruppe verbunden. Die Länge der Spulenkabel kann bei der eben beschriebenen bevorzugten Anordnung unmittelbar unterhalb des Induktors besonders gering gehalten werden, was Verluste in den Spulenkabeln minimiert. Aufgrund der hohen übertragenen Leistungen und der langen Betriebsdauer können hier bereits sehr geringe Verbesserungen bezüglich der Länge der Spulenkabel über die Lebensdauer eines Kochfelds gerechnet erhebliche Einspareffekte erzielen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: ein Kochfeld,
- Fig. 2: eine Detailansicht eines Teils des Kochfelds von Fig. 1,
- Fig. 3: ein zweidimensional skaliertes Kochfeld,
- Fig. 4: ein in einer Wanne enthaltenes Kochfeld und
- Fig. 5: ein Kochfeld, dessen Schienen teilweise eine Wand einer Wanne bilden.

### Detaillierte Beschreibung der Ausführungsbeispiele

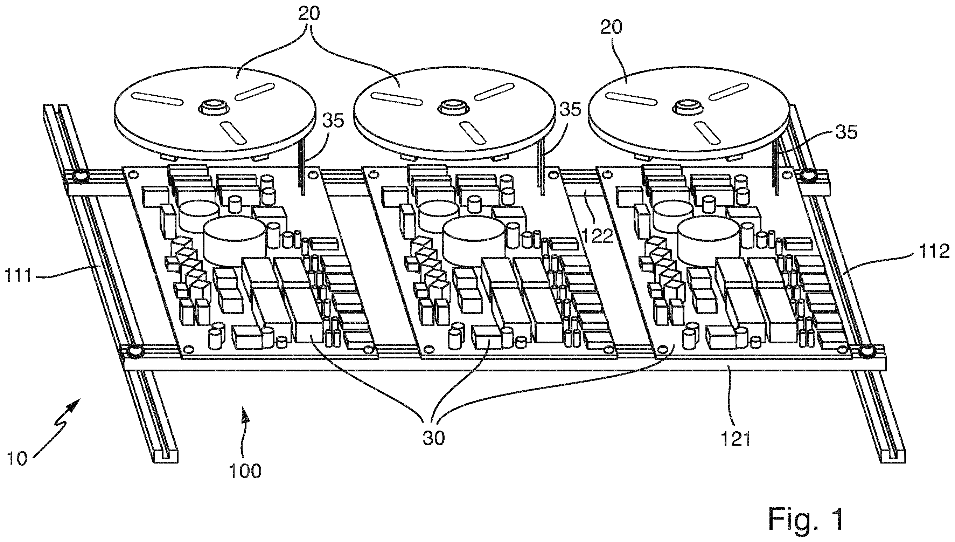

Fig. 1 zeigt ein Kochfeld 10 mit einem Trägersystem 100. Das Kochfeld 10 weist insgesamt drei Induktoren 20 und drei elektrische Baugruppen 30 auf, wobei jedem Induktor 20 eine Baugruppe 30 zugeordnet ist. Die Induktoren 20 sind dabei mittels jeweiliger Spulenkabel 35 elektrisch mit den elektrischen Baugruppen 30 verbunden. Die Baugruppen 30 sind zur Leistungsversorgung der Induktoren 20 ausgebildet und weisen hierfür auch eine geeignete, nicht explizit dargestellte Leistungselektronik auf. Des Weiteren sind Bedienelemente für das fertige Kochfeld 10 vorzusehen, die hier aber auch nicht dargestellt sind.

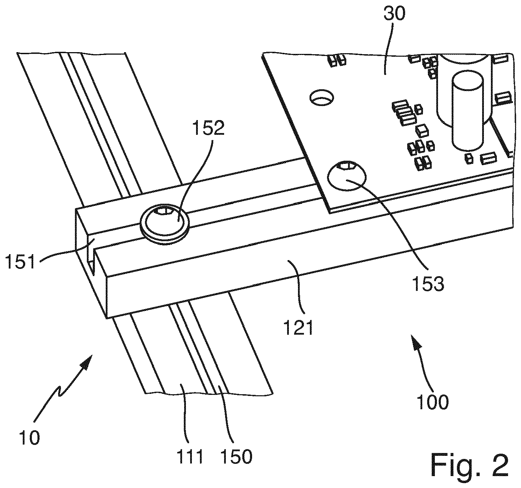

Das Trägersystem 100 trägt die Baugruppen 30 und hält sie in bestimmten Positionen. Hierzu weist das Trägersystem 100 eine erste Längsschiene 111, eine hierzu parallele zweite Längsschiene 112, eine erste Querschiene 121 und eine hierzu parallele zweite Querschiene 122 auf. Die Baugruppen 30 sind unmittelbar an den beiden Querschienen 121, 122 angebracht, wohingegen die beiden Querschienen 121, 122 an den beiden Längsschienen 111, 112 angebracht sind, und zwar auch unmittelbar. Die Baugruppen 30 sind dabei entlang der beiden Querschienen 121, 122 stufenlos bzw. beliebig verschiebbar. Ebenso sind die Querschienen 121, 122 entlang der Längsschienen 111, 112 stufenlos verschiebbar. Wie dies genau erfolgt, wird weiter unten mit Bezug zu Fig. 2 detaillierter beschrieben.

Fig. 2 zeigt die Befestigung der ersten Querschiene 121 an der ersten Längsschiene 111 sowie der linken Baugruppe 30 an der ersten Querschiene 121 im Detail. Dabei ist zu erkennen, dass die erste Längsschiene 111 eine Nut 150 aufweist, welche in der Darstellung nach oben geöffnet ist. Ebenso weist die erste Querschiene 121 eine Nut 151 auf, welche auch nach oben geöffnet ist. Die jeweiligen Nuten 150, 151 erstrecken sich jeweils entlang der jeweiligen Längsrichtungen der Schienen 111, 121. Diese können somit auch als Profilschienen bezeichnet werden. Die Nuten können in die Tiefe hinein gerade sein, vorteilhaft sind sie leicht hinterschnitten, besonders vorteilhaft umgekehrt V-förmig.

Die erste Querschiene 121 ist mittels einer ersten Schraube 152 an der ersten Längsschiene 111 befestigt. Hierzu ist die erste Schraube 152 zunächst durch die Nut 151 der ersten Querschiene 121 hindurchgesteckt und greift in die Nut 150 der ersten Längsschiene 111 ein. Die erste Querschiene 121 weist hierzu eine nicht dargestellte Durchgangsbohrung auf. Durch die Ausbildung eines entsprechenden Kraft- und Formschlusses behält die Querschiene 121 relativ zur ersten Längsschiene 111 ihre Position bei. Dies entspricht einer einfachen Ausführung einer Verbindung, welche zudem jederzeit lösbar ist, indem die erste Schraube 152 nach oben herausgedreht wird. Sie kann bei Bedarf an einer anderen Position wieder eingesetzt werden. Dies ermöglicht eine stufenlose bzw. beliebig platzierbare Verschiebbarkeit.

Die Baugruppe 30 ist unter anderem mittels einer zweiten Schraube 153 an der ersten Querschiene 121 befestigt. Hierzu ist die zweite Schraube 153 zunächst durch eine Bohrung in der Baugruppe 30 durchgesteckt und greift weiter unten in die Nut 151 der ersten Querschiene 121 ein. Dies ermöglicht ebenso eine zuverlässige Befestigung der Baugruppe 30, ohne dass feste, diskrete Anbringstellen zu beachten wären. Zum Entfernen oder Verschieben der Baugruppe 30 kann die zweite Schraube 153 nach oben herausgedreht werden. Sie kann anschließend auch in anderer Position wieder eingedreht werden, um die Baugruppe 30 an einer anderen Position zu befestigen.

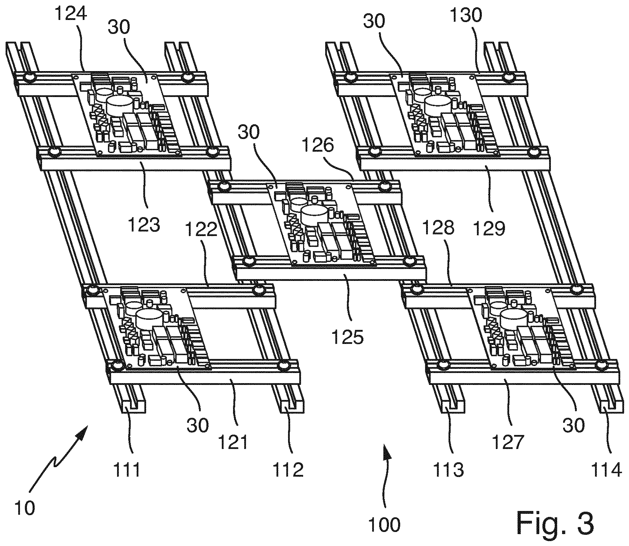

Fig. 3 zeigt ein zweidimensional erweitertes Ausführungsbeispiel eines Kochfelds 10. Die einzelnen Elemente sind dabei ähnlich zu denjenigen, welche bereits in den Fig. 1 und 2 dargestellt sind. Allerdings sind insgesamt deutlich mehr Elemente vorhanden.

Das Trägersystem 100 des Kochfelds 10 von Fig. 3 weist insgesamt vier Längsschienen 111, 112, 113, 114 sowie insgesamt zehn Querschienen 121, 122, 123, 124, 125, 126, 127, 128, 129, 130 auf. Die Querschienen 121 bis 130 sind dabei jeweils an zwei der Längsschienen 111, 112, 113, 114 angebracht. Dies erfolgt in ähnlicher Weise wie dies weiter oben mit Bezug auf die Fig. 1 und 2 beschrieben wurde.

Zwischen jeweils zwei Querschienen 121 bis 130 ist eine jeweilige Baugruppe 30 befestigt. Auch dies erfolgt in ähnlicher Weise wie weiter oben mit Bezug auf die Fig. 1 und 2 beschrieben. Grundsätzlich können nach Lösen der entsprechenden Befestigungen sowohl die Baugruppen 30 entlang der jeweiligen Querschienen 121 bis 130 verschoben werden wie auch die Querschienen 121 bis 130 an den jeweiligen Längsschienen 111 bis 114 verschoben werden. Dies ermöglicht eine besonders freie, stufenlose Verschiebbarkeit der Baugruppen 30, wodurch diese ideal unter jeweiligen Induktoren angeordnet werden können. In Fig. 3 sind beispielhafte, mögliche Anordnungen von Baugruppen 30 gezeigt, bei welchen die freie Positionierbarkeit ausgenutzt wurde. Die jeweiligen Induktoren sind in Fig. 3 der Übersichtlichkeit halber nicht dargestellt.

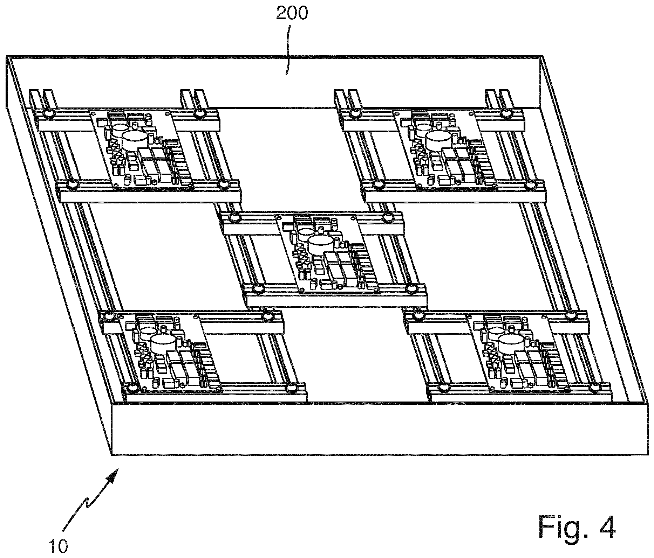

Fig. 4 zeigt das Kochfeld 10 von Fig. 3, welches in ein Gehäuse in Form einer Wanne 200 eingelegt ist. Eine solche Wanne 200 kann beispielsweise oberhalb eines Backofens zur Aufnahme des Kochfelds 10 angeordnet sein. Die Wanne 200 kann beispielsweise auch in einem Schrank oder einem Unterbau ausgebildet sein, auf welchem das Kochfeld 10 zur Verwendung angeordnet werden soll. Bezüglich des Kochfelds 10 kann vollumfänglich auf die Beschreibung von Fig. 3 verwiesen werden. Auf eine Wiederholung wird deshalb verzichtet.

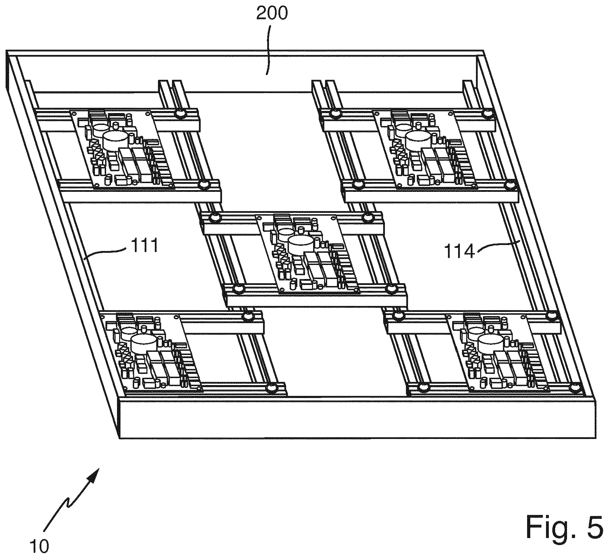

Fig. 5 zeigt eine alternative Ausführung des in einer Wanne 200 enthaltenen Kochfelds 10 von Fig. 4. Dabei sind die jeweils außenliegenden Längsschienen 111, 114 so ausgebildet, dass sie jeweils eine äußere Wand der Wanne 200 bilden. Damit ist das Kochfeld 10 mit der Wanne 200 als integriertes Modul ausgeführt, welches beispielsweise in geeignete Unterbauten oder Möbel eingesetzt werden kann. Auf die Ausbildung einer zusätzlichen Wanne kann dann verzichtet werden.

## Patentansprüche

1. Kochfeld, aufweisend:
- eine Anzahl von Induktoren (20),
- einer Anzahl von elektrischen Baugruppen (30), wobei jedem Induktor (20) jeweils eine elektrische Baugruppe (30) zugeordnet ist, und
- ein Trägersystem (100) zum Halten der Baugruppen (30),
**dadurch gekennzeichnet, dass**
das Trägersystem (100) zumindest eine erste Längsschiene (111) und eine zweite Längsschiene (112) aufweist, welche zueinander parallel angeordnet sind und entlang welchen zumindest eine Baugruppe (30) stufenlos verschiebbar und befestigbar ist.

2. Kochfeld nach Anspruch 1, **gekennzeichnet durch** eine Anzahl weiterer Längsschienen (113, 114), welche parallel zu der ersten Längsschiene (111) angeordnet sind, und entlang welchen eine Anzahl der Baugruppen (30) stufenlos verschiebbar und befestigbar sind.

3. Kochfeld nach Anspruch 1 oder 2, **dadurch gekennzeichnet, dass** das Trägersystem (100) zumindest eine erste Querschiene (121) und eine zweite Querschiene (122) aufweist, welche zueinander parallel angeordnet sind und entlang welchen zumindest eine Baugruppe (30) stufenlos verschiebbar und befestigbar ist, wobei vorzugsweise eine Anzahl weiterer Querschienen (123, 124, 125, 126, 127, 128, 129, 130) vorgesehen ist, welche parallel zu der ersten Querschiene (121) angeordnet sind, und entlang welchen eine Anzahl der Baugruppen (30) stufenlos verschiebbar und befestigbar sind.

4. Kochfeld nach Anspruch 3, **dadurch gekennzeichnet, dass** die Querschienen (121, 122, 123, 124, 125, 126, 127, 128, 129, 130) quer zu den Längsschienen (111, 112, 113, 114) angeordnet sind.

5. Kochfeld nach Anspruch 3 oder 4, **dadurch gekennzeichnet, dass** eine Anzahl von Baugruppen (30) unmittelbar an jeweils zwei Querschienen (121, 122, 123, 124, 125, 126, 127, 128, 129, 130) stufenlos verschiebbar befestigt sind und die jeweiligen Querschienen (121, 122, 123, 124, 125, 126, 127, 128, 129, 130) an zwei Längsschienen (111, 112, 113, 114) stufenlos verschiebbar befestigt sind, wobei vorzugsweise die Querschienen (121, 122, 123, 124, 125, 126, 127, 128, 129, 130) mittels einer Schraubverbindung (152) mit den Längsschienen (111, 112, 113, 114) lösbar verbunden sind.

6. Kochfeld nach einem der vorhergehenden Ansprüche, **dadurch gekennzeichnet, dass** eine Anzahl von Baugruppen (30) mit einer jeweiligen Quer- oder Längsschiene (111, 112, 113, 114, 121, 122, 123, 124, 125, 126, 127, 128, 129, 130) mittels einer Anzahl von Schraubverbindungen (153) lösbar verbunden sind.

7. Kochfeld nach einem der vorhergehenden Ansprüche, **dadurch gekennzeichnet, dass** eine Anzahl von Baugruppen (30) mit einer jeweiligen Quer- oder Längsschiene (111, 112, 113, 114, 121, 122, 123, 124, 125, 126, 127, 128, 129, 130) mittels einer Anzahl von Clipverbindern, Abstandshaltern, Positionierstiften und/oder Federn lösbar verbunden sind.

8. Kochfeld nach einem der vorhergehenden Ansprüche, **dadurch gekennzeichnet, dass** eine Anzahl von Quer- und/oder Längsschienen (111, 112, 113, 114, 121, 122, 123, 124, 125, 126, 127, 128, 129, 130) jeweils als Profilschiene ausgebildet sind, wobei vorzugsweise eine Anzahl von Profilschienen (111, 112, 113, 114, 121, 122, 123, 124, 125, 126, 127, 128, 129, 130) eine jeweilige Nut (150, 151) aufweist.

9. Kochfeld nach einem der vorhergehenden Ansprüche, **dadurch gekennzeichnet, dass** eine oder mehrere der Quer- und/oder Längsschienen (111, 112, 113, 114, 121, 122, 123, 124, 125, 126, 127, 128, 129, 130) eine jeweilige Wand eines Gehäuses (200) bilden.

10. Kochfeld nach einem der Ansprüche 1 bis 8, **dadurch gekennzeichnet, dass** das Kochfeld (10) in eine Gehäusewanne (200) eingelegt und/oder darin befestigt ist.

11. Kochfeld nach einem der vorhergehenden Ansprüche, **dadurch gekennzeichnet, dass** eine Anzahl von Bedienelementen und/oder Anzeigen an dem Trägersystem (100) angebracht sind.

12. Kochfeld nach einem der vorhergehenden Ansprüche, **dadurch gekennzeichnet, dass** eine jeweilige Baugruppe (30) unmittelbar unterhalb des Induktors (20), welchem sie zugeordnet ist, angeordnet ist, wobei vorzugsweise ein jeweiliger Induktor (20) mittels einer Anzahl von Spulenkabeln (35) elektrisch mit seiner zugeordneten Baugruppe (30) verbunden ist.

## Claims

1. Cooktop, comprising:
- a number of inductors (20),
- a number of electric assembly groups (30), wherein a respective electric assembly group (30) is assigned to each inductor (20), and
- a support system (100) for holding the assembly groups (30),
**characterized in that**
the support system (100) includes at least one first longitudinal rail (111) and one second longitudinal rail (112), disposed in parallel to each other, and along said rails at least one assembly group (30) is continuously shiftable and fixable.

2. Cooktop according to claim 1, **characterized by** a number of further longitudinal rails (113, 114), disposed in parallel to the first longitudinal rail (111), and along said rails a number of assembly groups (30) is continuously shiftable and fixable.

3. Cooktop according to claim 1 or 2, **characterized in that** the support system (100) includes at least one first transverse rail (121) and one second transverse rail (122), disposed in parallel to each other, and along said rails at least one assembly group (30) is continuously shiftable and fixable, wherein preferably a number of further transverse rails (123, 124, 125, 126, 127, 128, 129, 130) are provided and disposed in parallel to the first transverse rail (121), and along said rails a number of assembly groups (30) are continuously shiftable and fixable.

4. Cooktop according to claim 3, **characterized in that** the transverse rails (121, 122, 123, 124, 125, 126, 127, 128, 129, 130) are disposed transversely to the longitudinal rails (111, 112, 113, 114).

5. Cooktop according to claim 3 or 4, **characterized in that** a number of assembly groups (30) are continuously shiftable directly fixed to in each case two transverse rails (121, 122, 123, 124, 125, 126, 127, 128, 129, 130) and the respective transverse rails (121, 122, 123, 124, 125, 126, 127, 128, 129, 130) are continuously shiftable fixed to two longitudinal rails (111, 112, 113, 114), wherein preferably the transverse rails (121, 122, 123, 124, 125, 126, 127, 128, 129, 130) are removably connected to the longitudinal rails (111, 112, 113, 114) by means of a screw connection (152).

6. Cooktop according to any of the preceding claims, **characterized in that** a number of assembly groups (30) are removably connected to a respective transverse or longitudinal rail (111, 112, 113, 114, 121, 122, 123, 124, 125, 126, 127, 128, 129, 130) by means of screw connections (153).

7. Cooktop according to any of the preceding claims, **characterized in that** a number of assembly groups (30) are removably connected to a respective transverse or longitudinal rail (111, 112, 113, 114, 121, 122, 123, 124, 125, 126, 127, 128, 129, 130) by means of a number of clip connectors, spacers, locating pins and/or springs.

8. Cooktop according to any of the preceding claims, **characterized in that** a number of transverse and/or longitudinal rails (111, 112, 113, 114, 121, 122, 123, 124, 125, 126, 127, 128, 129, 130) are profile rails, wherein preferably a number of profile rails (111, 112, 113, 114, 121, 122, 123, 124, 125, 126, 127, 128, 129, 130) have a respective groove (150, 151).

9. Cooktop according to any of the preceding claims, **characterized in that** one or more of the transverse and/or longitudinal rails (111, 112, 113, 114, 121, 122, 123, 124, 125, 126, 127, 128, 129, 130) build a respective wall of a housing (200).

10. Cooktop according to any of claims 1 to 8, **characterized in that** the cooktop (10) is inserted into a housing trough (200) and/or fixed thereto.

11. Cooktop according to any of the preceding claims, **characterized in that** a number of operating elements and/or displays are attached to the support system (100).

12. Cooktop according to any of the preceding claims, **characterized in that** a respective assembly group (30) is disposed directly below the inductor (20) to which it is assigned, wherein preferably a respective inductor (20) is electrically connected to its assigned assembly group (30) by means of a number of coil cables (35).

## Revendications

1. Plan de cuisson, présentant :
- une pluralité d'inducteurs (20),
- une pluralité de modules électriques (30), à chaque inducteur (20) étant associé un module électrique respectif (30), et
- un système de support (100) pour retenir les modules (30),
**caractérisé en ce que**
le système de support (100) présente au moins un premier rail longitudinal (111) et un deuxième rail longitudinal (112) qui sont disposés parallèlement l'un à l'autre et le long desquels au moins un module (30) peut être déplacé en continu et fixé.

2. Plan de cuisson selon la revendication 1, **caractérisé par** une pluralité de rails longitudinaux supplémentaires (113, 114) qui sont disposés parallèlement au premier rail longitudinal (111) et le long desquels une pluralité des modules (30) peuvent être déplacés en continu et fixés.

3. Plan de cuisson selon la revendication 1 ou 2, **caractérisé en ce que** le système de support (100) présente au moins un premier rail transversal (121) et un deuxième rail transversal (122) qui sont disposés parallèlement l'un à l'autre et le long desquels au moins un module (30) peut être déplacé en continu et fixé, de préférence une pluralité de rails transversaux supplémentaires (123, 124, 125, 126, 127, 128, 129, 130) étant prévus, lesquels sont disposés parallèlement au premier rail transversal (121) et le long desquels une pluralité des modules (30) peuvent être déplacés en continu et fixés.

4. Plan de cuisson selon la revendication 3, **caractérisé en ce que** les rails transversaux (121, 122, 123, 124, 125, 126, 127, 128, 129, 130) sont disposés transversalement aux rails longitudinaux (111, 112, 113, 114).

5. Plan de cuisson selon la revendication 3 ou 4, **caractérisé en ce qu'**une pluralité de modules (30) sont fixés de manière déplaçable en continu directement à deux rails transversaux respectifs (121, 122, 123, 124, 125, 126, 127, 128, 129, 130) et les rails transversaux respectifs (121, 122, 123, 124, 125, 126, 127, 128, 129, 130) sont fixés de manière déplaçable en continu à deux rails longitudinaux (111, 112, 113, 114), de préférence les rails transversaux (121, 122, 123, 124, 125, 126, 127, 128, 129, 130) étant connectés de manière amovible au moyen d'une connexion vissée (152) aux rails longitudinaux (111, 112, 113, 114).

6. Plan de cuisson selon l'une quelconque des revendications précédentes, **caractérisé en ce qu'**une pluralité de modules (30) sont connectés de manière amovible au moyen d'une pluralité de connexions vissées (153) à un rail transversal ou longitudinal respectif (111, 112, 113, 114, 121, 122, 123, 124, 125, 126, 127, 128, 129, 130).

7. Plan de cuisson selon l'une quelconque des revendications précédentes, **caractérisé en ce qu'**une pluralité de modules (30) sont connectés de manière amovible au moyen d'une pluralité de connecteurs enclipsables, d'éléments d'espacement, de goupilles de positionnement et/ou de ressorts à un rail transversal ou longitudinal respectif (111, 112, 113, 114, 121, 122, 123, 124, 125, 126, 127, 128, 129, 130).

8. Plan de cuisson selon l'une quelconque des revendications précédentes, **caractérisé en ce qu'**une pluralité de rails transversaux et/ou longitudinaux (111, 112, 113, 114, 121, 122, 123, 124, 125, 126, 127, 128, 129, 130) sont réalisés à chaque fois en tant que rail profilé, de préférence une pluralité de rails profilés (111, 112, 113, 114, 121, 122, 123, 124, 125, 126, 127, 128, 129, 130) présentant une rainure respective (150, 151).

9. Plan de cuisson selon l'une quelconque des revendications précédentes, **caractérisé en ce qu'**un ou plusieurs des rails transversaux et/ou longitudinaux (111, 112, 113, 114, 121, 122, 123, 124, 125, 126, 127, 128, 129, 130) forment une paroi respective d'un boîtier (200).

10. Plan de cuisson selon l'une quelconque des revendications 1 à 8, **caractérisé en ce que** le plan de cuisson (10) est encastré et/ou fixé dans une cuve de boîtier (200).

11. Plan de cuisson selon l'une quelconque des revendications précédentes, **caractérisé en ce qu'**une pluralité d'éléments de commande et/ou d'affichages sont montés sur le système de support (100).

12. Plan de cuisson selon l'une quelconque des revendications précédentes, **caractérisé en ce qu'**un module respectif (30) est disposé directement en dessous de l'inducteur (20) auquel il est associé, de préférence un inducteur respectif (20) est connecté électriquement à son module associé (30) au moyen d'une pluralité de câbles de bobine (35).
